# EUROPÄISCHE PATENTSCHRIFT

(11) **EP 1 262 349 B1**
(45) Veröffentlichungstag und Bekanntmachung des Hinweises auf die Patenterteilung: **04.10.2006**
(21) Anmeldenummer: 02008375.4
(22) Anmeldetag: 12.04.2002
(51) Int. Cl.: B60J 1/20, B60J 3/02

(54) **Verfahren zur Steuerung einer Fensterjalousie**
Process for controling a window blind
Procédé pour contrôler un store pour fenêtre

(30) Priorität: 01.06.2001 DE 10126682
(43) Veröffentlichungstag der Anmeldung: 04.12.2002
(73) Patentinhaber: AUDI AG, 85045 Ingolstadt (DE)
(72) Erfinder: Schwantner, Bernhard, 85072 Eichstätt (DE)
(74) Vertreter: Thielmann, Frank

(56) Entgegenhaltungen:
- DE-A- 3 222 861
- GB-A- 2 173 752
- US-A- 4 331 359
- US-A- 5 165 188
- US-A- 5 873 621

## Beschreibung

Die Erfindung betrifft ein Verfahren zur Steuerung eines Fensters sowie einer Fensterjalousie eines Kraftfahrzeuges, wobei das Fenster des Kraftfahrzeuges durch Betätigung einer Schaltvorrichtung zu öffnen und zu schließen ist und wobei auch die Fensterjalousie über die Schaltvorrichtung des Fensters betätigt wird.

Zur Abdunklung der Fenster von Kraftfahrzeugen sind Jalousien bekannt, die mit Saugnäpfen an den Fenstern angebracht werden. Dies sind im eigentlichen Sinne allerdings keine Jalousien, da sie nicht auf und zu gezogen werden können, sondern sie müssen jedesmal mittels der Saugnäpfe an der Fensterscheibe befestigt bzw. wieder abgenommen werden. Diese "Jalousien" gibt es sowohl für das Heckfenster als auch für die hinteren Seitenfenster. Von hochwertigen Fahrzeugen sind automatisch zu betätigende Jalousien für das Heckfenster bekannt, wohingegen für die hinteren Seitenfenster nur mechanische Jalousien bekannt sind, die in den Türen untergebracht sind und per Hand vor das Fenster gezogen werden können. Wie auch bei mechanisch zu betätigenden Fenstern besteht hier der Nachteil, dass die Jalousien von den vorderen Plätzen, insbesondere vom Fahrer während der Fahrt nicht betätigt werden können.

Es ist daher wünschenswert, die Jalousien ebenfalls elektromotorisch oder über einen anderweitig angetriebenen Aktuator, z.B. mittels Druckluft, betätigen zu können. Die Jalousien selbst können dabei im Fensterrahmen oder am Fenster selbst geführt werden. Im letzteren Fall benötigen die Jalousien einen entsprechend festen Rahmen.

Zur Betätigung der Jalousiefunktion werden Schalter benötigt, wie sie von den Fensterheberschaltern bekannt sind. Diese Schalter sind in der Regel Wippschalter mit je einer Stellung zum Öffnen und Schließen. Es wurde vorgeschlagen, die Schalter für die hinteren Fensterjalousien im hinteren Dachmodul unterzubringen. In diesem bereits vorhandenen Dachmodul sind z.B. Leselampen mit der dazugehörigen Elektronik untergebracht, so dass die Integration der Schalter für die hinteren Fensterjalousien in dem Dachmodul insofern relativ einfach ist als bereits eine Elektronik und Zuleitungen dafür vorhanden sind. Da die hinteren Jalousien auch von vorne, insbesondere vom Fahrer bedienbar sein sollen, müssen zusätzlich auch vorne noch Schalter vorgesehen werden. Diese Schalter könnten z.B. in der Mittelkonsole untergebracht sein und dort von der Elektronik eines in der Regel bei hochwertigen Fahrzeugen vorhandenen Klimabedienteils eingelesen und ausgewertet werden. Sollte ein solches Klimabedienteil mit zugehöriger Elektronik nicht vorhanden sein, müssen die Schalter an eine andere Steuerelektronik angeschlossen werden. Es entsteht somit Mehraufwand in mehreren elektronischen Steuergeräten. Zusätzlich müssen die Türsteuergeräte modifiziert werden. Die hinteren Türsteuergeräte bedienen sonst die Zentralverriegelung, die Fensterheber einschließlich Einklemmschutz, die Schalterbeleuchtungen, das Einlesen der Schalter, die Ambientebeleuchtung sowie die sogenannte "Pfützenleuchte", die beim Öffnen der Tür die Straße beleuchtet. In diese Türsteuergeräte muss mittels Soft- und/oder Hardware ein Sicherheitsfeature implementiert werden, mit dem sichergestellt wird, dass das Seitenrollo nur dann nach oben gefahren werden kann, wenn die Scheibe vollständig geschlossen ist.

Schließlich erhöht sich die Anzahl der Schalter, dass heißt für jedes mit Jalousien versehene Fenster ist je ein Schalter für das Fenster und ein Schalter für die Jalousie erforderlich. Dies erhöht auch den Bedienungsaufwand und führt zu einer Beeinträchtigung der Fahrsicherheit.

Aus der Druckschrift DE 32 22 961 A1 ist eine Blendschutzvorrichtung für mit einer versenkbaren Seitenscheibe ausgerüstete Fahrzeuge bekannt. Diese Blendschutzvorrichtung umfasst eine den Abmessungen der Seitenscheibe angepasste Tafel, welche parallel zur Seitenscheibe in den die Seitenscheibe aufnehmenden Karosseriekörper versenkbar ist, wobei für die Bedienung der Seitenscheibe und der Tafel das gleiche Bedienelement verwendet wird. Damit die Seitenscheibe und die Tafel nacheinander geöffnet bzw. geschlossen werden können ist dort jedoch ein erstes Betätigen des Bedienelementes, ein Umschalten des Bedienelementes mittels eines zusätzlichen Umschaltelementes und ein erneutes Betätigen des Bedienelementes erforderlich.

Vor diesem Hintergrund ist es Aufgabe der vorliegenden Erfindung, die Bedienung eines Fensters und einer Fensterjalousie eines Kraftfahrzeuges weiter zu vereinfachen, indem eine elektrische Schaltvorrichtung mit einer für den Fahrer des Kraftfahrzeuges wirklich transparenten Systematik ausgestattet ist. Schließlich soll die Fensterjalousie nur dann betätigbar sein, wenn das Fenster vollständig geschlossen ist bzw. soll das Fenster auch nur dann betätigbar sein, wenn die Fensterjalousie vollständig geöffnet ist, um eine Beschädigung der empfindlichen Fensterjalousie durch den Fahrtwind zu vermeiden.

Gelöst wird diese Aufgabe durch ein Verfahren zur Steuerung eines Fensters sowie einer Fensterjalousie eines Kraftfahrzeuges gemäß dem Patentanspruch 1, wobei das Fenster und die Fensterjalousie durch eine einmalige Betätigung der elektrischen Schaltvorrichtung nacheinander geöffnet bzw. nacheinander geschlossen werden, indem das Fenster erst dann heruntergefahren wird, wenn sich die Schaltvorrichtung eine vorgegebene Zeitspanne in der Betätigungsstellung "Fenster öffnen" befand und wenn die Fensterjalousie heruntergefahren ist, und indem die Fensterjalousie erst dann hochgefahren wird, wenn sich die Schaltvorrichtung eine vorgegebene Zeitspanne in der Betätigungsstellung "Fenster schließen" befand und wenn das Fenster geschlossen ist. Damit ergibt sich ein sinnvoller Ablauf der Funktion Fensterjalousie und Fenster öffnen bzw. der Funktion Fenster und Fensterjalousie schließen und es ist sichergestellt, dass das Fenster nicht geöffnet werden kann, solange die Fensterjalousie geschlossen ist bzw. dass die Jalousie nicht ausgefahren werden kann, solange das Fenster nicht geschlossen ist, da bei teilweise geöffnetem Fenster und bei ganz oder teilweise geschlossener Jalousie die Jalousie durch den Fahrtwind beschädigt werden könnte. Dies stellt auch sicher, dass der Bediener, der einen Bedienfehler begangen hat, seinen Bedienfehler erkennen kann, wenn sich nichts tut.

Ist das Fenster einmal geschlossen und die Schaltvorrichtung hat die Funktion "Jalousie betätigen" übernommen, so kann über die Schaltvorrichtung die Jalousie an jede beliebige Stelle nach oben oder nach unten gefahren werden. Dies ist solange der Fall, bis die Fensterjalousie aus einer das Fenster mindestens teilweise überdeckenden Position ganz nach unten gefahren wird. Erst dann, wenn die Jalousie ganz unten ist, übernimmt die Schaltvorrichtung wieder die Funktion "Fenster öffnen", wobei das Fenster erst dann heruntergefahren wird, wenn sich die Schaltvorrichtung eine vorgegebene Zeitspanne in der vorgegebenen Betätigungsstellung "Fenster öffnen" befand. Auch hier ist wieder sichergestellt, dass der Bediener rechtzeitig einen Bedienfehler erkennen kann.

Hat die Schaltvorrichtung wieder die Funktion "Fenster öffnen/schließen" übernommen, so kann durch Betätigen der Schaltvorrichtung in die Stellungen "Fenster öffnen" und "Fenster schließen" das Fenster entweder geöffnet oder geschlossen werden.

Insgesamt wird also mit der Erfindung sichergestellt, dass die Jalousie nur dann betätigt werden kann, wenn das Fenster vollständig geschlossen ist bzw. das Fenster nur dann betätigt werden kann, wenn die Jalousie vollständig eingefahren ist.

Ein Ausführungsbeispiel der Erfindung wird nachfolgend anhand der Zeichnungen näher beschrieben. Dabei zeigen:
- Fig. 1: eine schematische Darstellung einer Autotür und
- Fig. 2a und 2b: ein Flussdiagramm.

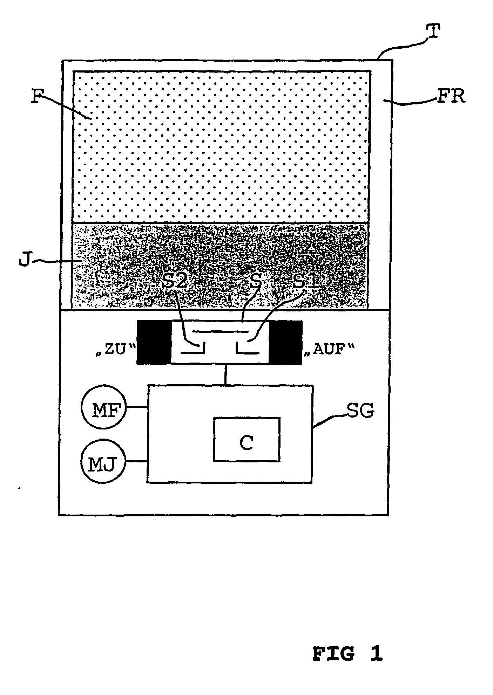

Die Darstellung gemäß Fig. 1 zeigt eine sehr vereinfachte schematische Ansicht einer Tür T eines Kraftfahrzeuges, beispielsweise einer hinteren Türe. Im oberen Teil der Tür T befindet sich der Fensterrahmen FR, in dem die Führungen für das Fenster F (nicht sichtbar) liegen. Das Fenster F ist geschlossen. Etwa ein Drittel des Fensters wird von einer Jalousie J überdeckt. Im unteren Türbereich ist ein sehr vereinfachtes Blockschaltbild bestehend aus einem Schalter S, einem Steuergerät SG, welches mit dem Schalter S verbunden ist, gezeigt. An das Steuergerät SG sind weiter ein Fensterhebermotor MF und ein Jalousiehebermotor MJ angeschlossen. Weiter verfügt das Steuergerät über eine Zeitsteuereinheit C. Der Schalter S, der ein herkömmlicher Fensterheberschalter sein kann, ist als Wippschalter ausgebildet und kann daher in die Stellung S1 "AUF" bzw. "Fenster öffnen" und S2 "ZU" bzw. "Fenster schließen" gebracht werden. In der Regel handelt es sich bei dieser Schaltvorrichtung S um eine Tastwippe, die durch Federspannung wieder in ihre Ruhelage zurückkehrt.

Durch Betätigen des Schalters S in die Stellung "AUF" oder in die Stellung "ZU" wird nach dem im folgenden beschriebenen Verfahren entweder der Fensterhebermotor MF oder der Jalousiehebermotor MJ aktiviert.

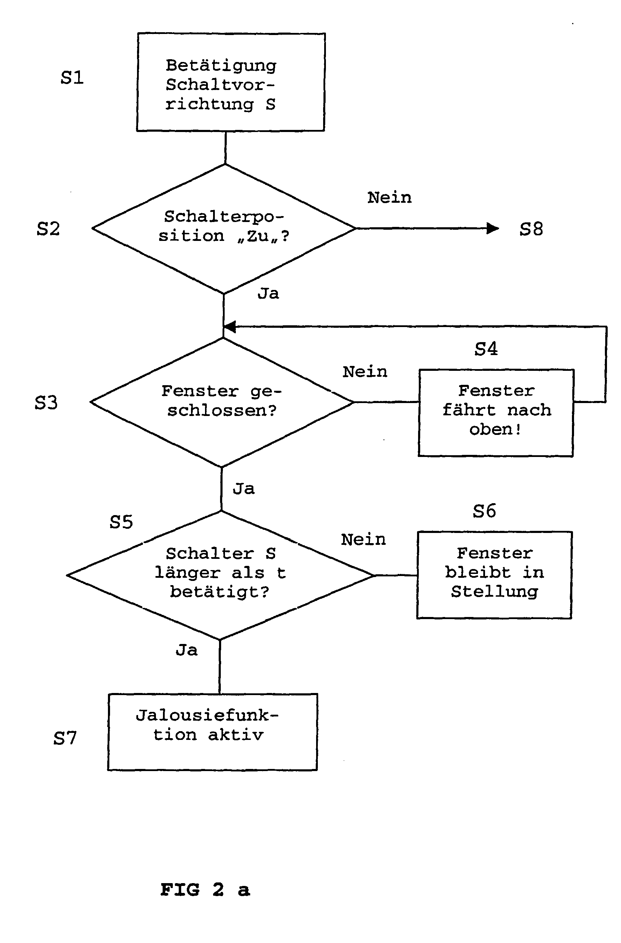

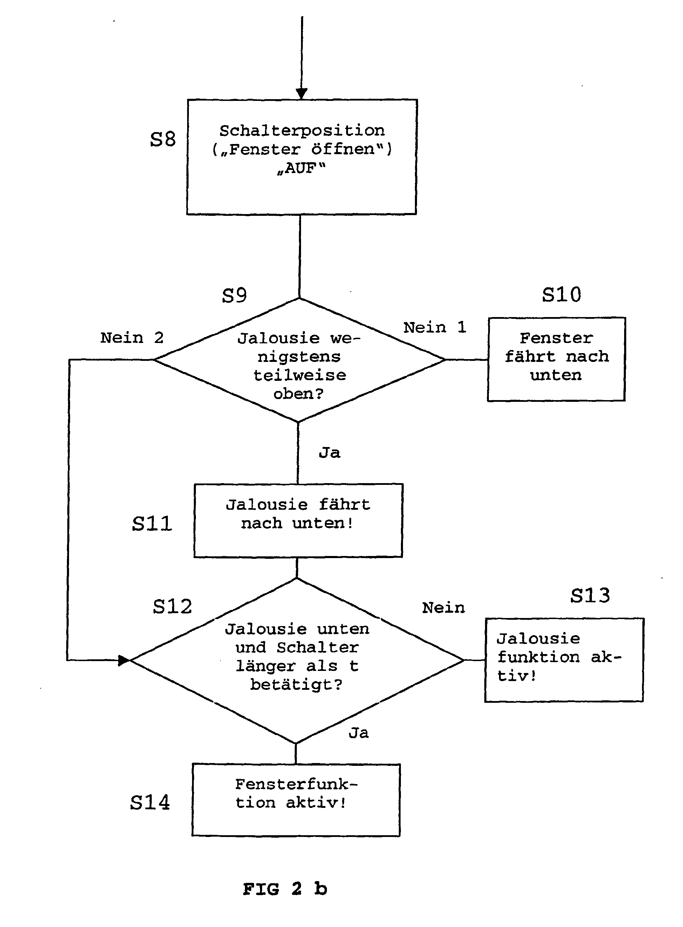

Die prinzipielle Wirkungsweise des Verfahrens wird nachfolgend anhand des Flussdiagramms der Figuren 2a und 2b beschrieben. Das Steuergerät SG fragt zyklisch die Schaltvorrichtung S ab und stellt im Schritt S2 fest, ob der Schalter S in die Position "Fenster schließen" verbracht wurde. Ist dies nicht der Fall, wird das Verfahren bei Schritt S8 fortgesetzt. Dies wird weiter unten näher beschrieben. Ist der Schalter S in die Position "Fenster schließen" gebracht, so wird vom Steuergerät SG zunächst abgefragt, ob das Fenster bereits geschlossen ist oder nicht. Diese Information liegt im Steuergerät bereits vor. Sie wurde beispielsweise dadurch ermittelt, dass der Motor eine gewisse Anzahl an Umdrehungen zurückgelegt hatte und andererseits das Fenster in der oberen Türdichtung zum Anschlag kam, so dass der Motor blockiert wurde. Diese Blockierung wurde ebenfalls über eine entsprechende Sensorvorrichtung vom Steuergerät erkannt. Ist das Fenster noch nicht geschlossen, so wird der Schaltvorrichtung S vom Steuergerät SG die Funktion "Fenster öffnen/schließen" zugeordnet und das Fenster fährt nach oben, da ja die Schaltvorrichtung S sich noch in der Stellung "Fenster schließen" befindet. Das Steuergerät fragt nun wieder nach, ob das Fenster geschlossen ist (immer noch Schritt S3). Ist dies der Fall, so wird über die Zeitsteuereinheit C des Steuergerätes SG ermittelt, ob der Schalter S länger als eine vorgegebene Zeitspanne t betätigt worden ist (Schritt S5). Ist dies nicht der Fall, so bleibt gemäß Schritt S6 das Fenster in der Stellung stehen, in der es sich befand, als der Schalter S nicht mehr betätigt wurde. In diesem Fall bleibt weiterhin die Funktion "Fenster öffnen/schließen" aktiviert und beim wiederholten Betätigen des Schalters S wird die Fensterhebevorrichtung aktiviert.

Wurde allerdings der Schalter S länger als die vorgegebene Zeitspanne t, die beispielsweise 2 Sekunden betragen kann, betätigt, so ordnet das Steuergerät SG der Schaltvorrichtung S die Funktion "Jalousie öffnen/schließen" zu und die Jalousie wird, wenn sich die Schaltvorrichtung S immer noch in der Position "ZU" befindet, hochgefahren. Nun bleibt entsprechend Schritt S7 die Jalousiefunktion solange aktiv, bis gemäß der Schritte S8 ff. wieder die Fensterfunktion aktiviert wird. "Jalousiefunktion aktiv" bedeutet dabei, dass bei jeder weiteren Betätigung der Schaltvorrichtung S die Jalousie J weiter nach oben oder weiter nach unten d.h. an jede beliebige Position gefahren werden kann.

Soll das Fenster wieder geöffnet werden, so muss zunächst die Jalousie herunter gefahren werden. Der Bediener drückt dabei die Schaltvorrichtung S in die Position "AUF", so dass der Schaltkontakt S1 betätigt wird. Im Schritt S2 der Fig. 2a ist damit das Kriterium "Nein" erfüllt und das Verfahren wird mit Schritt S8 (Fig. 2b) fortgesetzt. Das Steuergerät detektiert somit in Schritt S9 die Schalterposition "AUF" und stellt zunächst fest, ob die Jalousie wenigstens teilweise ausgefahren ist. Sollte der Jalousiehebermotor mit zugehöriger Steuerlogik keine Positionserfassung der Jalousie J haben, so kann an dieser Stelle einfach vorgesehen werden, dass der Jalousiehebermotor MJ zunächst in Drehrichtung "Jalousie einfahren" aktiviert wird und dann festgestellt wird, wann er blockiert. Dieses Blockieren würde bedeuten, dass die Jalousie eingefahren ist (Schritt S11, S12). Weis das Steuergerät SG entweder über eine Positionserfassung oder aus anderen Gründen, dass die Jalousie sich bereits unten befindet, so wird im Schritt S12 der Schaltvorrichtung S direkt die Funktion "Fenster öffnen/schließen" zugeordnet und das Fenster fährt nach unten, solange sich der Schalter S noch in der Position "AUF" befindet. Wahlweise kann hier auch die Verzweigung "Nein 2" vorgesehen sein, über die man zu Schritt S12 gelangt, zu dem man auch gelangt, wenn bei "Ja"-Entscheidung im Schritt S9 zunächst die Jalousie ganz nach unten gefahren wird (Schritt S11). Im Schritt S12 wird dann abgefragt, ob der Schalter S länger als eine vorgegeben Zeit t betätigt worden ist. Ist dies der Fall, dann wird die Fensterfunktion aktiv, d.h., das Steuergerät SG ordnet der Schaltvorrichtung S wieder die Funktion "Fenster öffnen/schließen" zu, so dass jetzt durch weitere oder erneute Betätigung des Schalters S in die Position "ZU" oder "AUF" das Fenster geschlossen oder geöffnet werden kann. War der Schalter nicht länger als die vorgegebene Zeitspanne t betätigt, so bleibt das Fenster F weiterhin geschlossen und die Jalousiefunktion bleibt weiterhin aktiv.

### Bezugszeichenliste

- F: Fenster
- J: Jalousie
- FR: Fensterrahmen
- S1, S2: Schaltstellungen "AUF" (= "Fenster öffnen"),
"ZU" (= "Fenster schließen")
- MF: Fensterhebermotor
- MJ: Jalousiehebermotor
- C: Zeitsteuereinheit
- SG: Steuergerät
- T: Tür

## Patentansprüche

1. Verfahren zur Steuerung eines Fensters (F) sowie einer Fensterjalousie (J) eines Kraftfahrzeuges, wobei das Fenster (F) des Kraftfahrzeuges durch Betätigung einer elektrischen Schaltvorrichtung (S) zu öffnen und zu schließen ist und wobei auch die Fensterjalousie (J) über die Schaltvorrichtung (S) des Fensters (F) betätigt wird,
**dadurch gekennzeichnet, dass**
das Fenster (F) und die Fensterjalousie (J) durch eine einmalige Betätigung der elektrischen Schaltvorrichtung (S) nacheinander geöffnet und geschlossen werden, indem
das Fenster (F) erst dann heruntergefahren wird, wenn sich die Schaltvorrichtung (S) eine vorgegebene Zeitspanne in der Betätigungsstellung "Fenster öffnen" befand und wenn die Fensterjalousie (J) heruntergefahren ist, und
die Fensterjalousie (J) erst dann hochgefahren wird, wenn sich die Schaltvorrichtung (S) eine vorgegebene Zeitspanne in der Betätigungsstellung "Fenster schließen" befand und wenn das Fenster (F) geschlossen ist.

2. Verfahren nach Anspruch 1, **dadurch gekennzeichnet, dass** die Fensterjalousie (J) nur so lange hochgefahren wird, wie sich die Schaltvorrichtung (S) in der Betätigungsstellung "Fenster schließen" befindet und beim Deaktivieren dieser Betätigungsstellung an ihrer erreichten Position verbleibt.

3. Verfahren nach Anspruch 2, **dadurch gekennzeichnet, dass** die Fensterjalousie (J) beim erneuten Aktivieren der Schaltvorrichtung (S) in die Betätigungsstellung "Fenster öffnen" oder "Fenster schließen" entweder geöffnet oder geschlossen wird.

4. Verfahren nach einem der Ansprüche 1 bis 3, **dadurch gekennzeichnet, dass** solange die Fensterjalousie (J) heruntergefahren ist nur das Fenster (F) beim Betätigen der Schaltvorrichtung (S) in die Stellung "Fenster öffnen" oder "Fenster schließen" entweder geöffnet oder geschlossen wird.

## Claims

1. Process for controlling a window (W) and a window blind (B) of a vehicle, whereby the window (W) of the vehicle is to be opened and closed by operating an electrical switch (S) and whereby the blind (B) is also operated by means of the switch (S) of the window (W),
**characterized in that**
the window (W) and the window blind (B) are successively opened and closed by a single actuation of the electrical switch, **in that**
the window (W) is only lowered if the switch device (S) has been in the "open the window" position for a set time and the blind is down, and
the window blind (B) is only raised if the switch (S) has been in the "close window" position for a set period of time and if the window (W) is closed.

2. Process in accordance with claim 1, **characterized in that** the window blind (B) is only raised if the switch (S) is in the "close window" setting and, on deactivating this setting, it remains in the position it has reached.

3. Process in accordance with claim 2, **characterized in that** the window blind (W) is either opened or closed on reactivation of the switch (S) in the "open window" or "close window" settings.

4. Process in accordance with one of claims 1 to 3, **characterized in that** as long as the window blind (B) is down, only the window (W) is either opened or closed on actuation of the switch (S) in the 'open window' or 'close window' setting.

## Revendications

1. Procédé de commande d'une vitre (F) ainsi que d'un store de vitre (J) d'un véhicule automobile, la vitre (F) du véhicule automobile étant ouverte ou fermée par actionnement d'un dispositif de commutation électrique (S) et le store de vitre (J) étant également actionné par le dispositif de commutation (S) de la vitre (F),
**caractérisé en ce que**
la vitre (F) et le store de vitre (J) sont ouverts et fermés l'un après l'autre par un actionnement unique du dispositif de commutation électrique (S),
la vitre (F) n'étant descendue que si le dispositif de commutation (S) se trouvait, pendant une marge de temps prédéfinie, dans la position d'actionnement « ouvrir la vitre » et que si le store de vitre (J) est descendu, et
le store de vitre (J) ne peut être remonté que si le dispositif de commutation (S) se trouvait, pendant une marge de temps prédéfinie, dans la position d'actionnement « fermer la vitre » et si la vitre (F) est fermée.

2. Procédé selon la revendication 1, **caractérisé en ce que** le store de vitre (J) ne peut être remonté que tant que le dispositif de commutation (S) se trouve en position d'actionnement « fermer la vitre » et en cas de désactivation de cette position d'actionnement reste sur sa position obtenue.

3. Procédé selon la revendication 2, **caractérisé en ce que** le store de vitre (J), lors d'une nouvelle activation du dispositif de commutation (S) dans la position d'actionnement « ouvrir la vitre » ou « fermer la vitre », est ou ouvert ou fermé.

4. Procédé selon l'une des revendications 1 à 3, **caractérisé en ce que**, tant que le store de vitre (J) est descendu, seule la vitre (F) est ou ouverte ou fermée lors de l'actionnement du dispositif de commutation (S) dans la position « ouvrir la vitre » ou « fermer la vitre ».
